# EUROPEAN PATENT APPLICATION

(11) **EP 4 723 454 A1**
(43) Date of publication of application: **08.04.2026**
(21) Application number: 24205015.1
(22) Date of filing: 07.10.2024
(51) Int. Cl.: H02M 1/00, H02M 1/44, H02M 7/483

(54) **METHOD AND CONTROLLER FOR CONTROLLING A POWER CONVERTER IN A POWER TRANSMISSION NETWORK**

(71) Applicant: GE Vernova Technology GmbH, 5400 Baden (CH)
(72) Inventor: DAVIDSON, Colin, Stafford, ST16 1WS (GB); STOTT, Timothy, Stafford, ST16 1WS (GB)
(74) Representative: Openshaw & Co.

(57) **Abstract**

There is provided a method, and a controller, for controlling a plurality of submodules (212) in a valve (224) of a power converter (120), the method comprising: determining, by a controller (160), a first switching time for a first submodule of the plurality of submodules (212); determining, by the controller (160), a second switching time for a second submodule of the plurality of submodules (212), wherein the first switching time differs from the second switching time by a time difference; wherein the time difference is based on a property of resonance in the power converter (120), wherein the resonance in the power converter is that caused by switching at least one submodule of the plurality of submodules (212) in the valve (224); and providing, by the controller (160), one or more switching commands to the valve (224) to cause the first submodule to switch at the first switching time and the second submodule to switch at the second switching time.

## Description

### FIELD OF THE INVENTION

The present invention relates to a method and a controller for controlling a power converter, and more particularly a method and a controller for controlling a switching of sub-modules in a power converter.

### BACKGROUND

In high voltage direct current (HVDC) power transmission networks alternating current (AC) power is typically converted to direct current (DC) power for transmission via a power transmission medium, for example overhead lines, under-sea cables, and/or underground cables. The conversion between DC power and AC power is utilised where it is necessary to interconnect DC and AC power, for example between an AC grid and a HVDC transmission line. In power transmission networks, power conversion means, also known as converter stations (i.e., power converters in converter stations, power inverters etc.) are required at each interface or interconnection between AC and DC power to implement the required conversion from AC to DC or from DC to AC.

Modular Multilevel Converters (MMCs) are a type of power converter used in some HVDC transmission systems. MMCs comprise valves, which comprise a plurality of submodules. In each valve the submodules are switched, based on a switching signal, to provide the power conversion. A switching algorithm conventionally selects specific submodules to be switched in and out of the valve, whereby to control an output voltage of the power converter, and thus achieve the voltage demand for the specific time period.

### SUMMARY OF THE INVENTION

The inventors have realised that switching submodules in a valve tends to cause resonance, for example resonance in the valve, and/or resonance in the power converter, and/or resonance in components connected to the valve or the power converter. In light of this, it is desired to develop a controller for a power converter that can reduce resonance, and thus achieve a smoother and more accurate voltage output.

According to a first aspect, there is provided a method for controlling a plurality of submodules in a valve of a power converter, the method comprising: determining, by a controller, a first switching time for a first submodule of the plurality of submodules; determining, by the controller, a second switching time for a second submodule of the plurality of submodules, wherein the first switching time differs from the second switching time by a time difference; wherein the time difference is based on a property of resonance in the power converter, wherein the resonance in the power converter is that caused by switching at least one submodule of the plurality of submodules in the valve; and providing, by the controller, one or more switching commands to the valve to cause the first submodule to switch at the first switching time and the second submodule to switch at the second switching time.

The resonance in the power converter may be that caused by switching only one submodule of the plurality of submodules in the valve.

The resonance in the power converter may be that caused by switching two or more submodules of the plurality of submodules in the valve.

Any one of the determining steps may comprise steps of acquiring, establishing, or calculating.

The time difference may be dependent on a property of resonance in the power converter.

The time difference may be calculated as a function of a property of resonance in the power converter.

The method may further comprise acquiring, by the controller, information which specifies respective switching times for selected submodules of the plurality of submodules which are to be switched, within a time period, in order to control the output voltage of the valve; pairing, by the controller, substantially each of the selected submodules into pairs, wherein each submodule pair comprises a respective first submodule and a respective second submodule.

The step of determining the first switching time may comprise acquiring, by the controller, from the information, a respective first switching time for each of the first submodules.

The step of determining the second switching time may be performed for each of the second submodules.

The providing step may comprise providing, by the controller, respective switching commands to the valve, to cause the respective first submodules and the respective second submodules to switch at their respective switching times.

The respective switching times may be different switching times within the time period.

The step of acquiring the information may comprise determining, by the controller, the selected submodules of the plurality of submodules based on a voltage demand; and determining, by the controller, the respective switching times for the selected submodules, wherein the respective switching times are different switching times with the time period.

The step of providing respective switching commands to the valve may comprise providing respective first switching commands for each of the first submodules at the respective first switching times, and providing respective second switching commands for each of the second submodules at the respective second switching times.

The method may further comprise determining, by the controller, the time difference such that a resonance in the power converter caused by switching the second submodule destructively interferes, at least to some extent, with a resonance in the power converter caused by switching the first submodule.

The method may further comprise determining, by the controller, the time difference such that a resonance in the power converter caused by switching the second submodule is out of phase, at least to some extent, with a resonance in the power converter caused by switching the first submodule.

The resonance in the power converter may induce an oscillating current in the power converter. The oscillating current may have a half-cycle time. The method may further comprise determining, by the controller, the time difference as an odd integer multiple of the half-cycle time.

A second resonance caused by switching the second switch may be out of phase with the first resonance by at least half a wavelength.

The resonance may cause oscillatory current in the power converter at a plurality of frequencies. At least one of the plurality of frequencies may be a dominant resonant frequency. The method may further comprise determining, by the controller, the time difference as an odd integer multiple of a half-cycle time of an oscillating current at the dominant resonant frequency.

The method may further comprise retrieving, by the controller, the time difference from a memory storage location.

The method may further comprise retrieving, by the controller, a dominant frequency of resonance from a memory storage location.

The method may further comprise storing, by the controller, the time difference in a memory location.

The method may further comprise storing, by the controller, a dominant frequency of resonance in a memory location.

The time difference may be determined during a commissioning stage or setup process of the power converter.

The time difference may be determined during an operation of the power converter.

The time difference may be determined periodically during an operation of the power converter.

The resonance may cause oscillatory current in the power converter at a plurality of frequencies. The method may further comprise determining, by the controller, a dominant resonant frequency of the resonance in the power converter.

Determining the dominant resonant frequency may comprise providing, by the controller, a test switching command to a submodule of the plurality of submodules to test switch that submodule; measuring, by the controller, a current in the valve, wherein at least a part of the current is an oscillatory current caused by resonance induced by the test switching of the submodule; and calculating, by the controller, the dominant resonant frequency by analysing the measured current in the valve.

Determining the dominant resonant frequency may comprise providing, by the controller, multiple switching commands to the plurality of submodules to switch multiple submodules; measuring, by the controller, a current in the valve over an integration time, wherein at least a part of the current is an oscillatory current caused by resonance induced by the switching of the multiple submodules; calculating, by the controller, a Fast Fourier Transform of the measured current; and determining, by the controller, a dominant frequency component of the Fast Fourier Transform.

The dominant frequency may be a frequency that is within a range of interest.

The current may comprise a frequency component equal to or greater than 100kHz.

The power converter may comprise a Rogowski coil.

The step of measuring the current may be performed by the Rogowski coil measuring the current in the valve or in a submodule of the plurality of submodules.

The method may further comprise iteratively performing steps 1 to 4 at least until a measured current value is below a threshold value, wherein:
step 1 comprises providing, by the controller, an initial first switching command at an initial first switching time to an initial first submodule of the plurality of submodules, and an initial second switching command at an initial second switching time to an initial second submodule of the plurality of submodules, wherein the initial first switching time differs from the initial second switching time by an initial time difference, wherein the initial time difference is based on the property of resonance in the power converter;
step 2 comprises measuring, by the controller, a current in the power converter, wherein the current is a result of switching the initial first submodule and the initial second submodule at the respective initial switching times;
step 3 comprises comparing, by the controller, the measured current to the threshold value, and, in response to the measured current exceeding the threshold value, altering, by the controller, the initial time difference to an updated time difference; and
step 4 comprises setting, by the controller, the initial time difference to the updated time difference.

Altering may include increasing or decreasing. Altering may include increasing or decreasing by a fixed amount or by a fixed percentage. Altering may include increasing or decreasing in a particular direction.

According to a second aspect, there is provided a controller for controlling a plurality of submodules in a valve of a power converter, the controller configured to: determine a first switching time for a first submodule of the plurality of submodules; determine a second switching time for a second submodule of the plurality of submodules, wherein the first switching time differs from the second switching time by a time difference; wherein the time difference is based on a property of resonance in the power converter, wherein the resonance in the power converter is that caused by switching at least one submodule of the plurality of submodules in the valve; and provide one or more switching commands to the valve to cause the first submodule to switch at the first switching time and the second submodule to switch at the second switching time.

Generally, the controller disclosed herein tends to be configured to execute the methods described herein.

According to a third aspect, there is provided a computer program comprising instructions which when executed by a processor of a controller, cause the controller to perform the method of the first aspect.

According to a fourth aspect, there is provided a non-transitory computer-readable storage medium comprising the computer program of the third aspect.

It will be appreciated that particular features of different aspects of the invention share the technical effects and benefits of corresponding features of other aspects of the invention. More specifically, the technical effects and benefits of the controller, the computer program, and the non-transitory computer-readable medium, are shared by the method of the invention.

It will also be appreciated that the use of the terms "first" and "second", and the like, are merely intended to help distinguish between similar features and are not intended to indicate a relative importance of one feature over another, unless otherwise specified.

Within the scope of this application, it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible.

### BRIEF DESCRIPTION OF THE DRAWINGS

Figure 1 is a schematic illustration of an example of a power transmission network;
Figure 2 is a schematic illustration of a converter station including a power converter and a controller;
Figure 3 is a graph showing a change in a valve voltage plotted against time for a valve controlled according to a first switching command;
Figure 4 is a graph showing high-frequency resonance as current plotted against time;
Figure 5 is a graph showing a change in a valve voltage, for one submodule switching, plotted against time, for the valve controlled according to the first switching command;
Figure 6 is a graph showing high-frequency resonance as current, created as a result of the one voltage step change, plotted against time;
Figure 7 is a graph showing a change in a valve voltage for two submodules switching, plotted against time, for a valve controlled using the methods disclosed herein;
Figure 8A is a graph showing high-frequency resonance as current, created as a result of one voltage step change, plotted against time;
Figure 8B is a graph showing high-frequency resonance as current, created as a result of one voltage step change, plotted against time;
Figure 8C is a graph showing high-frequency resonance as current, created as a result of two voltage step changes, plotted against time;
Figure 9 is a process flow chart showing certain steps of a method for controlling submodules in a valve of a power converter;
Figure 10 is a graph showing a change in a valve voltage plotted against time for a valve controlled according to the first switching command;
Figure 11 is a graph showing a change in a valve voltage plotted against time for a valve controlled using the methods disclosed herein;
Figure 12 is a process flow chart showing certain steps of a method for determining a time difference and a resonant frequency;
Figure 13 is a process flow chart showing certain steps of a second method for determining a time difference and a resonant frequency; and
Figure 14 is a process flow chart showing certain steps of a method for modifying the time difference.

### DETAILED DESCRIPTION

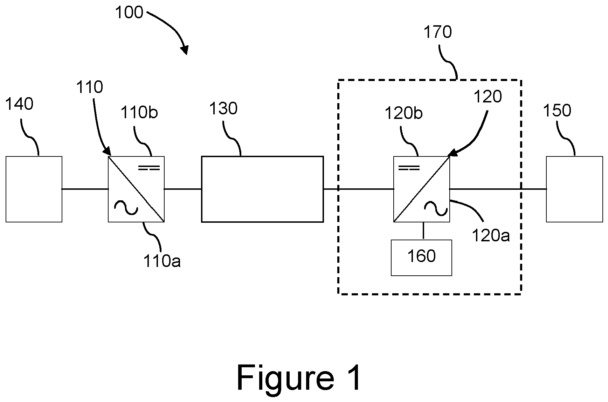

Figure 1 illustrates generically, an example of a power transmission network 100. The illustration is not intended to be limited to representing a particular power transmission scheme, such as a monopole or bipole High Voltage Direct Current (HVDC) transmission network, but is moreover provided as a generic example illustrating principles of operation of a power transmission network that are useful for understanding the invention. In this manner, the power transmission network 100 may represent, generically, a monopole or bipole scheme, or may represent a multiterminal power transmission scheme, for instance. Hence whilst specific features in the illustration are shown connected to each other with a specific number of connections, it will be understood that this is not intended to be limiting either, but moreover to illustrate a generic connection between features/components. Related, is that relative dimensions or distances between components perceived in the illustration are also not intended to be limiting.

The power transmission network 100 includes a first power converter 110 (also known as a converter, inverter, etc.), a second power converter 120, a transmission medium 130, a first AC network 140, a second AC network 150, and a controller 160. The second power converter 120 and the controller 160 may reside in or be part of a converter station 170.

The power converters 110, 120, are configured to convert AC power to DC power, acting essentially as rectifiers; or DC power to AC power, acting essentially as inverters. The power converters 110, 120 may each comprise a single converter in the case of a monopole system, or two converters in the case of a bipole system. The power converters 110, 120 may represent a plurality of converter stations arranged as a multi-terminal power transmission system. Generically, the first power converter 110 comprises a first AC side 110a and a first DC side 11 0b. Generically, the second power converter 120 comprises a second AC side 120a and a second DC side 120b.

The first power converter 110 is connected to a first AC network 140. The first AC network 140 is connected to the first AC side 110a of the first power converter 110. The second power converter 120 is connected to a second AC network 150. The second AC network 150 is connected to the second AC side 120a of the second power converter 120.

The first AC network 140 and/or second AC network 150 may be electrical power transmission systems comprising power generation apparatus, transmission apparatus, distribution apparatus, and electrical loads. The first AC network 140 and/or second AC network 150 may comprise a renewable power generation network such as a wind-power generation network, solar-power generation network, bio-power generation network. The first AC network 140 or second AC network 150 may be a consumer network, or a network containing a mix of consumers and generators. By way of non-limiting example, the first AC network 140 may be a power generation network, with second AC network 150 being a network containing a mix of consumers and generators, for instance. In particular examples, the power converters 110, 120 may be geographically remote. For instance, the first power converter 110 may reside on an off-shore platform connected to a wind farm, and the second power converter 120 may reside on-shore.

The power transmission medium 130 connects the first power converter 110 and the second power converter 120. The power transmission medium 130 is connected between the first DC side 110b of the first power converter 110 and the second DC side 120b of the second power converter 120. The power transmission medium 130 may comprise electrical cables and other electrical components for connecting the first and second power converters 110, 120. For instance, the power transmission medium 130 may comprise a conductor providing a first electrical pole and/or a conductor providing a second electrical pole. A neutral arrangement may also be provided interconnecting the first and second power converters 110, 120. The power transmission medium 130 provides the medium through which DC power is transferred between the power converters 110, 120.

The operation of the power transmission network 100 can be generically described as follows. The first AC network 140 generates AC power that is provided to the first power converter 110 at the first AC side 11 0a. The first power converter 110 converts the received AC power to DC power for transmission to the transmission medium 130. The DC power is transmitted from the first DC side 110b of the first power converter 110 to the transmission medium 130. The second DC side 120b of the second power converter 120 receives DC power from the transmission medium 130. The second power converter 120 converts the received DC power to AC power. The AC power is then provided from the second AC side 120a of the second power converter 120 to the second AC network 150 for consumption, for instance.

As the second power converter 120 receives power from the transmission medium 130, the first power converter 110 transfers power from the AC network 140 to the transmission medium 130, such that the nominal voltage of the transmission medium 130 is maintained.

Additionally, in some circumstances, the first power converter 110 can also receive power from the transmission medium 130. The first power converter 110 can thus be configured to transfer real or reactive power in either direction, into or out of the first AC network 140. The second power converter 120 can also be configured to transfer real or reactive power in either direction, into or out of the second AC network 150.

The power transmission network 100 may be operated using methods such as synchronous grid forming (SGFM) wherein either or both of the power converters 110, 120 behave as three-phase, positive-phase sequence AC voltage sources behind an impedance, that operate at a frequency synchronous with other SGFM sources connected to the power transmission network 100.

The power transmission network 100 may further comprise controllers for controlling operations of components of the power transmission network 100. In particular, the controller 160 is arranged to be communicatively coupled to the second power converter 120 in order to control the second power converter 120 by executing the methods described herein. Such a controller may be referred to as a controller means or control means.

It will be appreciated that various other electrical components may be located at any particular location or with any particular feature/component in the example power transmission network 100. These may include switches, transformers, resistors, reactors, surge arrestors, harmonic filters and other components well known in the art.

It will be appreciated that converters or power conversion means may comprise a number of different technologies such as voltage sourced converters (for instance using insulated gate bipolar transistor (IGBT) valves). Such converters may generally be considered to use 'power electronics'. Power electronic converters may comprise multi-level voltage sourced converters, for instance.

It will be appreciated that cables used as power transmission mediums may comprise the following non-limiting examples of crosslinked polyethylene (XLPE) and/or mass impregnated (MI) insulation cables. Such cables may comprise a conductor (such as copper or Aluminium) surrounded by a layer of insulation. Dimensions of cables and their associated layers may be varied according to the specific application (and in particular, operational voltage requirements). Cables may further comprise strengthening or 'armouring' in applications such as subsea installation. Cables may further comprise sheaths/screens that are earthed at one or more locations.

Moreover, it will be understood that the power transmission network 100 may be used with three-phase power systems. In a three-phase power system, three conductors supply respective first, second and third phases of AC power to a consumer. Each of the first, second and third phases will typically have equal magnitude voltages or currents, which are displaced in phase from each other by 120°.

In a three-phase power system, phase currents and voltages can be represented by three single phase components: a positive sequence component; a negative sequence component; and a zero-sequence component. It is the positive sequence component that rotates in phase in accordance with the power system. Hence, in a preferred scenario, only positive sequence voltage/current will exist. It will be understood that an unbalance in voltage or current between the first, second, and third phases of a three-phase system, in magnitude or phase angle, can give rise to undesirable negative or zero-sequence components. Such an unbalance can be caused by fault conditions, for instance in the first and second AC networks 140, 150.

Additionally, although in this embodiment the converter station 170 comprises the second power converter 120, it is to be understood that embodiments should not be limited in this way. For example, in other embodiments, a converter station may comprise the first power converter 110 instead of the second power converter 120.

In addition to the above-described features, the controller 160 may comprise a memory and at least one processor. The memory may comprise computer-readable instructions, which when executed by the at least one processor, cause the controller to perform one or more of the methods described herein.

The controller 160 may also comprise a transceiver arrangement which may comprise a separate transmitter and receiver. The transceiver arrangement may be used to operatively communicate with other components or features of embodiments described herein either directly or via a further interface such as a network interface. The transceiver arrangement may for instance send and receive control signals using transmitter and receiver. The control signals may contain or define electrical control parameters such as reference currents or reference voltages.

The at least one processor is capable of executing computer-readable instructions and/or performing logical operations. The at least one processor may be a microcontroller, microprocessor, central processing unit (CPU), field programmable gate array (FPGA) or similar programmable controller. The processor is communicatively coupled to the memory and may in certain embodiments be coupled to the transceiver.

The memory may be a computer readable storage medium. For instance, the memory may include a non-volatile computer storage medium. For example, the memory may include a hard disk drive, flash memory etc.

The controller 160 may further comprise a user input device and/or output device.

The controller 160 may additionally include a user input device interface and/or a user output device interface, which may allow for visual, audible, or haptic inputs/outputs. Examples include interfaces to electronic displays, touchscreens, keyboards, mice, speakers, and microphones.

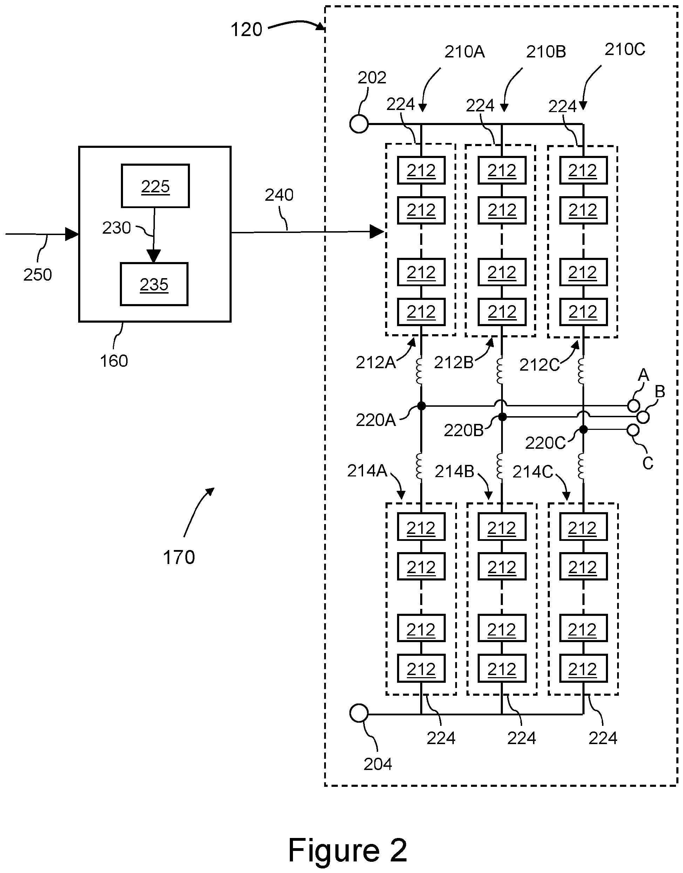

Figure 2 is a schematic illustration (not to scale) showing the converter station 170 in more detail. The converter station 170 comprises the second power converter 120 (which may simply be referred to as a power converter 120), and the controller 160.

The power converter 120 includes first and second DC terminals 202, 204. The first and second DC terminals 202, 204 are connected to a DC source.

A first converter phase 21 0A, a second converter phase 21 0B, and a third converter phase 210C (alternatively referred to as phase units, converter limbs etc.), extends between the first and second DC terminals 202, 204. The first, second and third converter phases 210A, 210B, 210C each correspond to a given phase A, B, C of a three-phase AC network.

Each converter phase 210A, 210B, 210C includes a first phase arm 212A, 212B, 212C (alternatively referred to as a limb portion), and second phase arm 214A, 214B, 214C. Each first phase arm 212A, 212B, 212C may be connected to a positive pole of the power transmission medium 130. Each second phase arm 214A, 214B, 214C may be connected to a negative pole of the power transmission medium 130. The first and second phase arms 212A, 212B, 212C, 214A, 214B, 214C are separated by corresponding AC terminals 220A, 220B, 220C.

Each AC terminal 220A, 220B, 220C is connected to a respective phase A, B, C of the three-phase AC network. The three-phase AC network may be, for example, the second AC network 150 as shown in Figure 1.

Other embodiments of the invention may include fewer than or greater than three converter phases, depending on the configuration of an associated AC network with which the power converter 120 is intended to be connected.

Each phase arm 212A, 212B, 212C, 214A, 214B, 214C includes a valve 224 (alternatively referred to as a chain-link converter) which extends between the associated AC terminal 220A, 220B, 220C and a corresponding one of the first or the second DC terminal 202, 204.

Each valve 224 includes a plurality of series connected submodules 212 (alternatively referred to as chain-link modules).

Each submodule 212 includes a number of switching elements (not shown) which are connected in parallel with an energy storage device in the form of a capacitor, although other types of energy storage device, i.e., any device that is capable of storing and releasing energy to selectively provide a voltage, for example a fuel cell or battery, may also be used.

Each switching element includes a semiconductor device, typically in the form of an Insulated Gate Bipolar Transistor (IGBT).

It is, however, possible to use other types of self-commutated semiconductor devices, such as a gate turn-off thyristor (GTO), a field effect transistor (FET), a metal-oxide-semiconductor field-effect transistor (MOSFET), an injection-enhanced gate transistor (IEGT), an integrated gate commutated thyristor (IGCT), a bimode insulated gate transistor (BIGT) or any other self-commutated switching device. In addition, one or more of the semiconductor devices may instead include a wide-bandgap material such as, but not limited to, silicon carbide, boron nitride, gallium nitride and aluminium nitride.

The number of semiconductor devices in each switching element may vary depending on the required voltage and current ratings of that switching element.

Each of the switching elements also includes a passive current check element that is connected in anti-parallel with a corresponding semiconductor device. The or each passive current check element may include at least one passive current check device. The or each passive current check device may be any device that is capable of limiting current flow in only one direction, e.g. a diode. The number of passive current check devices in each passive current check element may vary depending on the required voltage and current ratings of that passive current check element.

A first exemplary submodule may include a first pair of switching elements that are connected in parallel with a capacitor in a known half-bridge arrangement to define a 2-quadrant unipolar module. Switching of the switching elements selectively directs current through the capacitor or causes current to bypass the capacitor, such that the first exemplary submodule can provide zero or positive voltage and can conduct current in two directions.

A second exemplary submodule may include first and second pairs of switching elements and a capacitor are connected in a known full bridge arrangement to define a 4-quadrant bipolar module. In a similar manner to the first exemplary chain-link module, switching of the switching elements again selectively directs current through the capacitor or causes current to bypass the capacitor such that the second exemplary submodule can provide zero, positive or negative voltage and can conduct current in two directions.

Each valve 224 may include solely first exemplary submodules, solely second exemplary submodules, or a combination of first and second exemplary submodules.

In any event, the provision of a plurality of submodules 212 means that it is possible to build up a combined voltage across each valve 224, via the insertion of the energy storage devices, i.e., the capacitors, of multiple submodules 212 (with each submodule 212 providing its own voltage), which is higher than the voltage available from each individual submodule 212.

Accordingly, the submodules 212 work together to permit the valve 224 to provide a stepped variable voltage source. This permits the generation of a voltage waveform output from each valve 224. As such each valve 224 is capable of providing a wide range of complex waveforms.

The controller 160 is communicatively coupled to the power converter 120 to control an operation of the valves 224 to generate an AC voltage waveform at each AC terminal 220A, 220B, 220C, and thereby enable the power converter 120 to, in use, provide power transfer functionality between the AC and DC terminals.

For clarity, in Figure 2 only the valve 224 of the first phase arm 212A is shown as being communicatively coupled to the controller 160. However, it is to be understood that the methods disclosed herein are equally applicable to any one of the valves 224 of the power converter 120.

The controller 160 comprises a first module 225 and a second module 235.

The controller 160 is configured to receive a voltage demand 250. The voltage demand 250 is provided to the controller 160 by an external controller, for example by a pole controller (not shown). The voltage demand 250 specifies a voltage to be output from the valve 224 for a respective time period, in order to achieve a desired output voltage from the valve 224 for the respective time period.

For example, for the valve 224 of the first phase arm 212A to output a positive part of a sinusoidal voltage waveform, a time period of 100µs may be used. In this example, the voltage demand 250 will specify, for every 100µs (i.e., per time period), the voltage to be output from the valve 224 that is needed in order to achieve the desired sinusoidal voltage waveform.

The first module 225 is configured to implement an algorithm that selects submodules 212 in the valve 224 to be switched (for example, switched in or switched out of the valve 224), in order to achieve the desired output voltage from the valve 224, as specified in the voltage demand 250, for the respective time period. The first module 225 is configured to output a switching command 230 which specifies the selected submodules, from the plurality of submodules 212 within the valve 224, to be switched during the respective time period.

Additionally, the first module 225 is configured to specify the selected submodules for each time period, such that each of the switching times for the selected submodules are different switching times within the respective time period.

In other words, selected submodules are submodules from the plurality of submodules 212 that have been selected for switching, during a respective time period. The selected submodules change between each respective time period. For example, the first module 225 may specify for a first time period t₁, a first group of selected submodules x₁, x₂, ..., xₙ, each submodule having a different switching time t₁₋ₓ₁, t₁₋ₓ₂, ..., t₁₋ₓₙ; for a second time period t₂, a second group of selected submodules y₁, y₂, ..., yₘ, each submodule having a different switching time t_{2-y1}, t_{2-y2}, ..., t_{2-ym}. The first group of selected submodules x₁, x₂, ..., xₙ will be a different group of submodules compared to the second group of selected submodules y₁, y₂, ..., yₘ.

The inventors have realised that switching submodules in a valve tends to cause resonance in the valve, or in the power converter, or in components connected to the valve or power converter. In light of this, the second module 235 of the controller 160 is configured to modify the switching command 230, in order to provide an improved switching command 240 to the power converter 120. The improved switching command 240 tends to reduce high-frequency current that flows in the valve 224, which tends to reduce the radio emissions of the power converter 120, the potential overheating of capacitive equipment near the power converter 120, and the probability of electromagnetic interference on sensitive electronic circuits in the valve 224. All of these benefits tend to provide greater reliability of the power converter 120, and reduced expenditure on other, hardware-based mitigation methods such as RFI screening, passive filtering etc. The improved switching command 240 will now be described in detail.

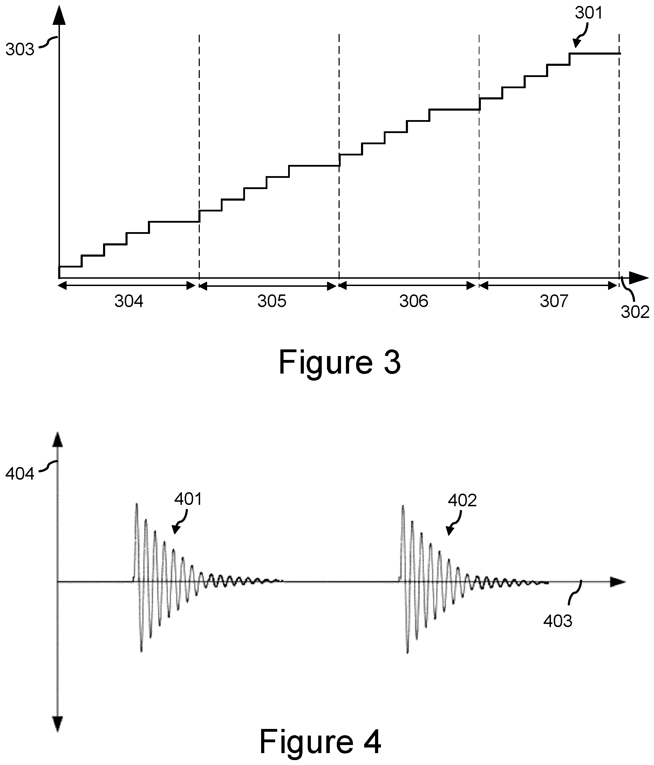

Figure 3 illustrates an example output voltage of the valve, wherein the valve is operated according to the switching command 230 (i.e., without the controller 160 providing the improved switching command 240, and with the valve operating from the switching command 230). The output voltage of the valve is plotted as a voltage waveform 301 on a graph of time on the horizontal axis 302 against voltage on the vertical axis 303. The voltage waveform 301 spans four time periods, 304, 305, 306, 307. In each time period, selected submodules from the plurality of submodules are switched, which creates voltage steps within each time period 304, 305, 306, 307. As can be seen, each of the voltage steps, and thus each of the switching times, are different switching times within the respective time period 304, 305, 306, 307. All of the voltage steps contribute to building a desired output voltage from the valve.

In other words, the power converter, which may be, for example, a Modular Multilevel Converter (MMC), can synthesise an AC voltage at the AC terminals 220A, 220B, 220C by switching select submodules from the plurality of submodules 212 at different times (e.g., the time periods 304, 305, 306, 307) to create a stepped voltage waveform. With enough steps (typically several hundred) it is possible to create a voltage waveform with very low levels of harmonic distortion.

The inventors have realised that if the voltage steps occur at regular time intervals, for example as shown in the voltage steps that occur in each of the time periods 304, 305, 306, 307 in Figure 3, there tends to be Fourier components of voltage at a frequency equal to the inverse of that time interval, and multiples thereof.

For example, if a time period 304, 305, 306, 307 is about 100 µs, the valve voltage waveform will include Fourier components close to 10 kHz, 20 kHz etc.

The inventors have further realised that the voltage steps created by switching submodules can excite resonances within the power circuit or power converter 120 at much higher frequencies, into the range of hundreds of kilohertz or even megahertz. The inventors have further realised that these resonances occur as a result of parasitic (stray) capacitances and inductances in the power converter 120.

For example, an MMC converter valve may be a large structure, for example 10m x 10m x 5m, and therefore may have significant parasitic capacitance to ground, for example in the order of 1 nano farad. The MMC converter valve may also have a significant inductance (for example, hundreds of microhenries). This means that a self-resonant frequency of the valve may be several hundred kHz.

The inventors have further realised that conventional controllers, valves, or power converters tend not to be able to mitigate resonance at such, relatively high frequencies, and that resonance of this type tends to result in pulses of high-frequency current occurring during each time period, as shown in Figure 4.

Figure 4 illustrates high-frequency resonance created in the valve 224 as a result of two of the voltage steps shown in Figure 3, plotted as current waveforms 401, 402 on a graph of time on the horizontal axis 403 against current on the vertical axis 404.

The inventors have further realised that the high-frequency current excited by such resonance flows through the valve (where it can potentially interfere with sensitive electronic circuits) and the stray capacitances of the valve to ground. Part of the high-frequency current may also flow in any other nearby equipment that has significant capacitance, which tends to result in overheating of those components. In addition, the frequencies involved tend to fall into the Long Wave radio band, which could potentially lead to radio interference.

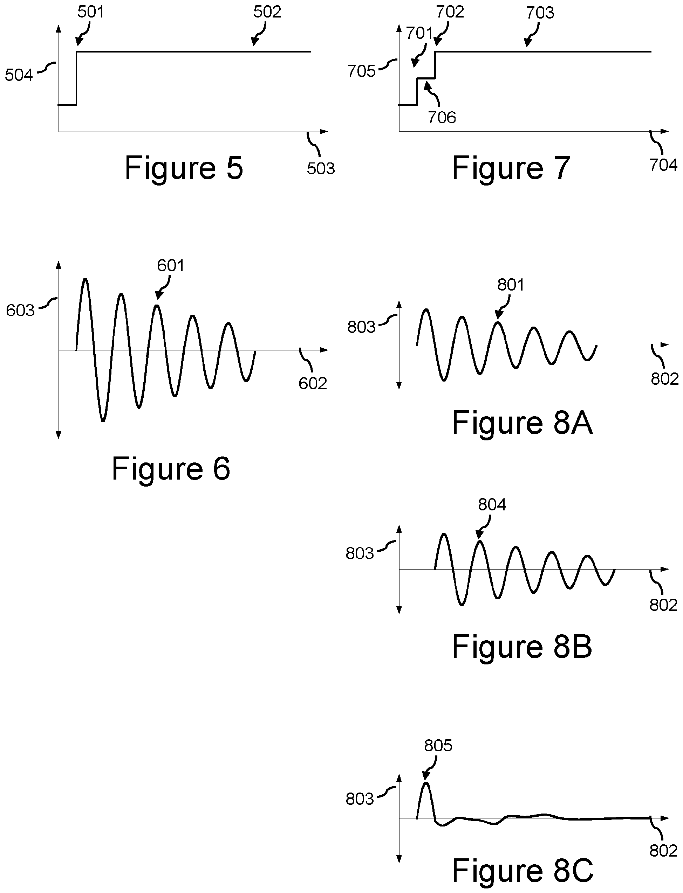

The inventors have further realised that if, as illustrated in the current waveforms 401, 402 of Figure 4, the current pulses are sufficiently well damped such that a first pulse 401 is reduced to substantially zero by the time a second pulse 402 starts, then each current pulse 401, 402 can effectively be considered in isolation and successive pulses will not interfere with each other. The effect of resonance from submodules switching, giving rise to a voltage step, is shown in Figures 5 and 6.

Figure 5 illustrates a single voltage step 501 created as a result of two submodules switching simultaneously. The switching of the two submodules creates the single voltage step 501. The single voltage step 501 is part of a voltage waveform 502 plotted on a graph of time on the horizontal axis 503 against voltage on the vertical axis 504. The switching of the two submodules to create the single voltage step 501 is another example of a valve operating according to the switching command 230.

Figure 6 illustrates a high-frequency resonance induced in the valve as a result of the voltage step 501, plotted as a current waveform 601 on a graph of time on the horizontal axis 602 against current on the vertical axis 603.

As can be seen by the current waveform 601, there is a significant amount of resonance created as a result of the single voltage step 501. In particular, for example, there are at least 5 oscillations shown in the current waveform 601. In this manner, the high-frequency resonance induced in the valve induces an oscillating current in the power converter.

The inventors have realised that this type of high-frequency resonance can be supressed by controlling a time interval between successive voltage steps so as to cancel a specific frequency of resonance. This may be achieved by implementing a time difference between two successive voltage steps (i.e., the time period between two successive submodules switching), such that the resonance induced by the second submodule switching is 180° (i.e., half a wavelength) out of phase with the resonance induced by the first submodule switching, and by superposition, the two resonances tend to destructively interfere, at least to some extent, and substantially cancel each other out.

This principle is shown in Figures 7 and 8A-C. Figure 7 illustrates two voltage steps 701, 702, which are part of a voltage waveform 703 plotted on a graph of time on the horizontal axis 704 against voltage on the vertical axis 705. The two voltage steps 701, 702, which are the result of two separate submodules switching, are separated by a time difference. In this example, the time difference is a time difference 706. The switching of the two submodules to create the two voltage steps 701, 702 is an example of a valve operating according to the improved switching command 240.

Figure 8A illustrates a high-frequency resonance induced in the valve 224 as a result of only the voltage step 701, plotted as a first current waveform 801 on a graph of time on the horizontal axis 802 against current on the vertical axis 803.

Figure 8B illustrates a high-frequency resonance induced in the valve 224 as a result of only the voltage step 702, plotted as a second current waveform 804 on a graph of time on the horizontal axis 802 against current on the vertical axis 803.

Figure 8C illustrates a high-frequency resonance induced in the valve 224 as a result of both of the voltage steps 701, 702, plotted as a resultant current waveform 805 on a graph of time on the horizontal axis 802 against current on the vertical axis 803. In the resultant current waveform 805, the first and second current waveforms 801, 804 have destructively interfered to some extent, and as a result the current in the valve 224, shown in the resultant current waveform 805, is cancelled to nearly zero. This is because, as discussed above, the second current waveform 804 is 180° out of phase with the first current waveform 801, and thus when the two current waveforms 801, 804 superimpose, they will substantially cancel each other out.

The inventors have further realised that this principle applies even if there is more than one submodule in each submodule pair, as long as the total number of submodules is an even number. Thus, although the example disclosed above in relation to Figure 7 is of two separate submodules switching, the invention should not be limited thereto.

In other embodiments, the two voltage steps 701, 702 are the result of, for example, four submodules switching, wherein two of the four submodules are simultaneously switched to create the first voltage step 701, and then the other two of the four submodules are simultaneously switched to create the second voltage step 702.

Similarly, the principle applies for any even integer number of submodules, wherein a first set of the even integer number of submodules are first simultaneously switched, and then a second set of the even integer number of submodules are then simultaneously switched.

The inventors have also realised that the resonance induced by switching the second submodule is substantially identical to the resonance induced by switching the first submodule, such that the resonance is effectively destructive, as long as the amplitude of the voltage step is the same, which is substantially always true in the above given examples. The inventors have also realised that the half-cycle time is generally uniform for all submodules.

It is noted that there is one half-cycle of oscillatory current at the start of the current waveform 805. In this embodiment, this half-cycle is not cancelled because the second current waveform 804 has not been induced at this stage. Additionally, in this embodiment, perfect cancellation is not obtained because the damping of the transient means that the second half-cycle is not quite as large as the first. However, the inventors have realised that the achieved cancellation is nevertheless beneficial. In particular, the total root mean square (rms) content of the resonant current is significantly reduced, whilst the overall voltage steps are the same. For example, comparing the resultant current waveform 805, which is the result of two submodules switching (providing the two voltage steps 701, 702) to the current waveform 601 which is also the result of two submodules switching (providing the single voltage step 501), it can be seen that the rms content of the resultant current waveform 805 is significantly less than the rms content of the current waveform 601.

Therefore, by controlling a time difference between two successive voltage steps, a specific high-frequency resonance tends to be cancelled out.

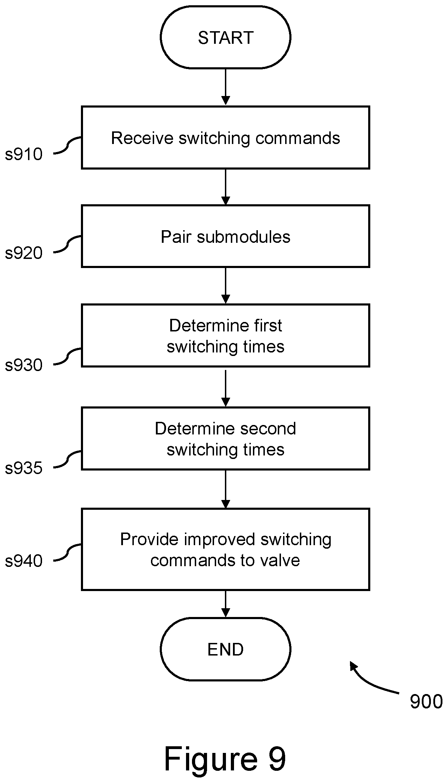

Figure 9 is a process flow chart showing a first embodiment of a method 900 for controlling submodules in a valve of a power converter, and in particular for determining the improved switching command 240 in a manner that tends to cancel a specific high-frequency resonance. The controller 160 can be operated according to the method 900. Additionally, the methods disclosed herein can be implemented using the apparatus and systems also disclosed herein.

At a step s910, the controller 160 acquires the switching command 230. As discussed above, the switching command 230 specifies selected submodules 212 in the valve 224 to be switched (for example, switched in or switched out of the valve 224), at a respective switching time during a time period, in order to create a voltage step that contributes to building a desired output voltage from the valve 224.

In this manner, the controller 160 acquires information which specifies respective switching times for selected submodules of the plurality of submodules which are to be switched, within a time period, in order to control the output voltage of the valve.

At a step s920, the controller 160 implements a pairing process to pair the selected submodules into first submodules and second submodules, thereby defining submodule pairs.

The pairing process may comprise numbering each of the selected submodules, from the switching command 230, in a sequential order according to their switching time. For example, the selected submodules may be numbered from 1 to n, where 1 is the submodule that has the earliest switching time for a respective time period, and n is the submodule that has the latest switching time for the respective time period. The submodules may then be paired according to the numbered sequence. For example, first and second submodules in the sequence may be paired defining a first pair, the third and fourth submodules may be paired defining a second pair, fifth and sixth submodules may be paired defining a third pair, etc. In each submodule pair, there is a respective first submodule and a second submodule. The first submodule is the submodule that has the earliest switching time of the pair (e.g., the first, third and fifth submodules from the first, second and third pairs respectively), and the second submodule is the submodule that has the latest switching time of the pair (e.g., the second, fourth and sixth submodules from the first, second and third pairs respectively).

If the switching command 230 specifies an odd number of selected submodules, one of either the first or last selected submodule may be omitted from the pairing process, in order to pair the remaining selected submodules. In this case, the pairing process will only be performed on the selected submodules from, for example, 1 to n-1.

In this manner, the controller 160 pairs substantially each of the selected submodules into pairs, wherein each pair comprises a respective first submodule and a respective second submodule.

At a step s930, the controller 160 determines a first switching time for the first submodules of the submodule pairs.

In this embodiment, the switching command 230 specifies switching times for each of the selected submodules as different switching times within a time period. The controller 160 determines the first switching times by acquiring the switching times of the respective first selected submodules from the switching command 230 (i.e., the controller 160 does not change the switching times of respective first selected submodules for the respective time period).

At a step s935, the controller 160 determines a second switching time for the second submodules of the submodule pairs, wherein the first switching times differ from the second switching times by a time difference.

In this embodiment, the controller 160 determines the second switching times by modifying each of the respective second switching times from the switching command 230, such that, for each submodule pair, the first switching time differs from the second switching time by the time difference. The time difference is based on a property of resonance in the power converter 120, wherein the resonance in the power converter 120 is that caused by switching at least one submodule of the plurality of submodules 212 in the valve 224.

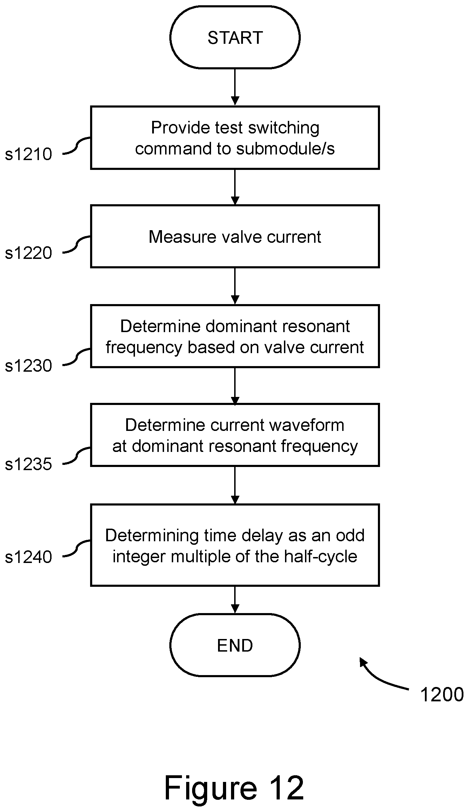

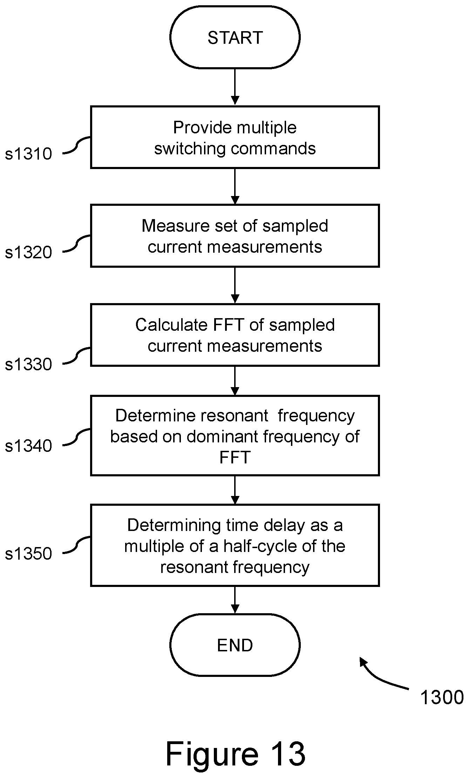

In order to determine the second switching times, the controller 160 may retrieve a value for the time difference from a memory storage location. Example methods for determining the time difference are discussed later below in relation to Figures 12 and 13.

At a step s940, the controller 160 provides the first and second switching times for each submodule pair, in the form of the improved switching command 240, to the valve 224, whereby causing each of the submodule pairs to switch at their respective switching times. In this embodiment, the controller 160 provides respective first switching commands for each of the first submodules at the respective first switching times, and provides respective second switching commands for each of the second submodules at the respective second switching times.

In this manner the controller 160 provides an improved switching command 240 to the power converter 120, which tends to reduce a particular frequency of resonance in the valve 224 or power converter 120, which tends provide the advantages as discussed above.

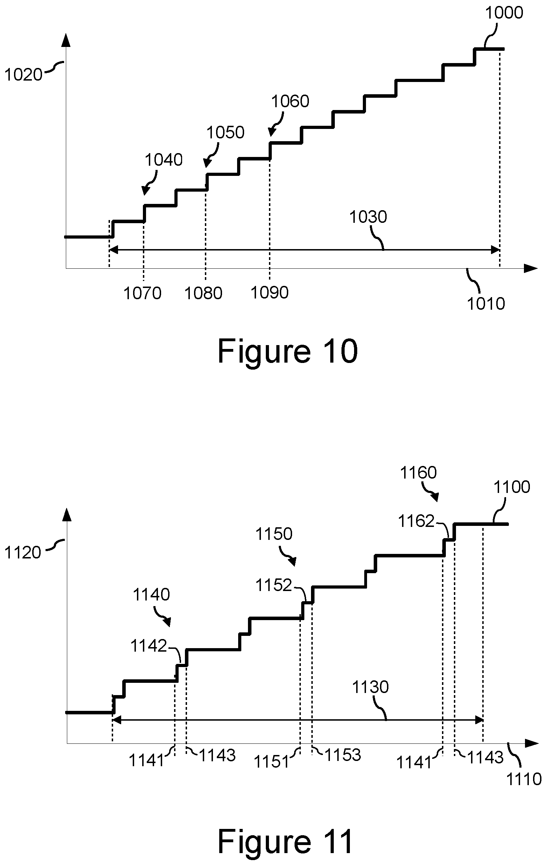

Figure 10 illustrates an example output voltage of a valve, wherein the valve is operated according to the switching command 230 (i.e., without the controller 160 providing the improved switching command 240). The output voltage of the valve is plotted as a voltage waveform 1000 on a graph of time on the horizontal axis 1010 against voltage on the vertical axis 1020. The waveform 1000 spans a time period 1030. In the time period 1030, selected submodules from the plurality of submodules are switched at their respective switching times, which creates voltage steps at the switching times. In this example, the switching times are all different switching times within the time period 1030. All of the voltage steps contribute to building a desired output voltage from the valve. For clarity only three voltage steps 1040, 1050, 1060 are labelled at their respective switching times 1070, 1080, 1090.

Figure 11 illustrates an example output voltage of the valve 224, wherein the valve 224 is operated according to the methods disclosed herein (i.e., with the controller 160 providing the improved switching command 240). The output voltage of the valve 224 is plotted as a voltage waveform 1100 on a graph of time on the horizontal axis 1110 against voltage on the vertical axis 1120. The waveform 1100 spans a time period 1130.

As can be seen in the time period 1130 selected submodules are in pairs and switch at respective switching times. Each submodule pair comprises a first switching time and a second switching time. The first switching time differs from the second switching time by the time difference. For clarity only three submodule pairs 1140, 1150, 1160 are labelled, including first switching times 1141, 1151, 1161, time differences 1142, 1152, 1162, and second switching times 1143, 1153, 1163.

As discussed above, by controlling a time difference between two successive voltage steps (i.e., the time between the first submodule switching and the second submodule switching in a submodule pair), a specific high-frequency resonance tends to be cancelled out at least to some extent. Thus, the valve 224 operated according to the methods disclosed herein, as shown in Figure 11, tends to have less resonance compared to a valve operated according to the switching command 230 as shown in Figure 10.

Figure 12 is a process flow chart showing certain steps of a first method 1200 for determining the time difference based on a property of resonance in the valve 224 or power converter 120.

The method 1200 determines the time difference such that a resonance in the power converter 120 caused by switching the second submodule destructively interferes, at least to some extent, with a resonance in the power converter 120 caused by switching the first submodule.

At a step s1210, the controller 160 provides a test switching command to a submodule of the plurality of submodules 212 in the valve 224, to switch that submodule. The switching of the submodule will create a voltage step similar to the voltage step 501 described above in relation to Figure 5. As a result of switching the submodule, resonance will be induced into the valve 224. The resonance may cause oscillatory current in the power converter 120 at a plurality of frequencies.

At a step s1220, the controller 160 measures a current in the valve 224, wherein at least a part of the current is an oscillatory current caused by resonance induced by the test switching of the submodule.

At a step s1230, the controller 160 analyses the measured current to determine a dominant resonant frequency. The dominant resonant frequency may be a frequency at which the amount of resonance (determined by, for example, the peak current amplitude at the respective frequency) is greater than at other frequencies.

At a step s1235, the controller 160 analyses the measured current at a frequency range that captures the dominant resonant frequency, to determine, for example, an oscillating current waveform similar to the current waveform 601 shown in Figure 6. The oscillating current waveform has a half-cycle time, which is the time taken for the oscillating current waveform to complete one half-cycle of an oscillation.

At a step s1240, the controller 160 determines the time difference as an odd integer multiple of the half-cycle time of the oscillating current waveform at the dominant resonant frequency. For example, if the half-cycle time is 5 microseconds, the time difference can be any odd integer multiple thereof, for example: 5 microseconds (one multiplied by the half-cycle time), or 15 microseconds (three multiplied by the half-cycle time), or 25 microseconds (five multiplied by the half-cycle time), etc.

Preferably, the controller 160 determines the time difference as one multiplied by the half-cycle time, such that the switching of the second submodule of the submodule pair will substantially cancel out a majority (e.g. almost all) of the resonance created by switching the first submodule of the submodule pair, similar to the example discussed above in relation to Figures 8A to 8C.

In this manner, the controller 160 is configured to determine the time difference based on a property of resonance in the valve 224 or power converter 120.

The first method 1200, to determine the time difference, does not need to be performed during the continuous operation of the power converter 120. The first method 1200 may be performed only once during a commissioning stage or setup process of the power converter 120 or valve 224. The first method 1200 may be performed again if there is a change in the power converter 120, for example a component of the power converter 120 is replaced due to servicing or maintenance requirements.

The first method 1200 may be performed during operation of the power converter, for example at periodic intervals. Periodically performing the first method 1200 tends to ensure the power converter 120 or valve 224 is operating at a maximum efficiency. This is because periodically re-calculating the time difference tends to ensure that any medium- or long-term changes in, for example, the resonant frequency can be accounted for.

Once the controller 160 has performed the first method 1200 to determine the time difference, the controller 160 may store the time difference in a memory location.

The controller 160, valve 224 or power converter 120 may comprise any suitable hardware or circuitry to implement the first method 1200. For example, the power converter 120 or valve 224 may comprise a Rogowski coil that is configured to measure the current in the valve 224, and provide the measured current to the controller 160 for processing.

Figure 13 is a process flow chart showing certain steps of a second method 1300 for determining the time difference based on a property of resonance in the valve 224 or power converter 120. The second method 1300 may be used instead of or in addition to the first method 1200 to determine the time difference. For example, in some embodiments, the time difference may be determined to be some function (e.g., a mean average) of the time differences determined using the first method 1200 and the second method 1300.

The method 1300 determines the time difference such that a resonance in the power converter 120 caused by switching the second submodule destructively interferes, at least to some extent, with a resonance in the power converter 120 caused by switching the first submodule.

At a step s1310, the controller 160 provides multiple switching commands to the plurality of submodules 212 of the valve 224 to switch multiple submodules.

At a step s1320, the controller 160 measures or records a current in the valve 224 over an integration time, wherein at least a part of the current is an oscillatory current caused by resonance induced by the switching of the multiple submodules.

At a step s1330, the controller 160 calculates a Fast Fourier Transform of the measured current.

At a step s1340, the controller 160 determines a dominant frequency component of the Fast Fourier Transform. The dominant frequency is a frequency within a range of interest, for example 100kHz.

At a step s1350, the controller 160 determines the time difference as an odd integer multiple of the half-cycle time of the oscillating current at the dominant resonant frequency. For example, if the half-cycle time is 5 microseconds, the time difference can be any odd integer multiple thereof, for example: 5 microseconds (one multiplied by the half-cycle time), or 15 microseconds (three multiplied by the half-cycle time), or 25 microseconds (five multiplied by the half-cycle time), etc.

Preferably, the controller 160 determines the time difference as one multiplied by the half-cycle time, such that the switching of the second submodule of the submodule pair will substantially cancel out a majority (e.g. almost all) of the resonance created by switching the first submodule of the submodule pair, similar to the example discussed above in relation to Figures 8A to 8C.

In this manner, the controller 160 is configured to determine the time difference based on a property of resonance in the valve 224 or power converter 120.

The second method 1300, to determine the time difference, does not need to be performed during the continuous operation of the power converter 120. The second method 1300 may be performed only once during a commissioning stage or setup process of the power converter 120 or valve 224. The second method 1300 may be performed again if there is a change in the power converter 120, for example a component of the power converter 120 is replaced due to servicing or maintenance requirements.

The second method 1300 may be performed during operation of the power converter, for example at periodic intervals. Periodically performing the second method 1300 tends to ensure the power converter 120 or valve 224 is operating at a maximum efficiency. This is because periodically re-calculating the time difference tends to ensure that any medium- or long-term changes in, for example, the resonant frequency can be accounted for.

Once the controller 160 has performed the second method 1300 to determine the time difference, the controller 160 may store the time difference in a memory location.

The controller 160, valve 224 or power converter 120 may comprise any suitable hardware or circuitry to implement the second method 1300. For example, the power converter 120 or valve 224 may comprise a Rogowski coil that is configured to measure the current in the valve 224, and provide the measured current to the controller 160 for processing.

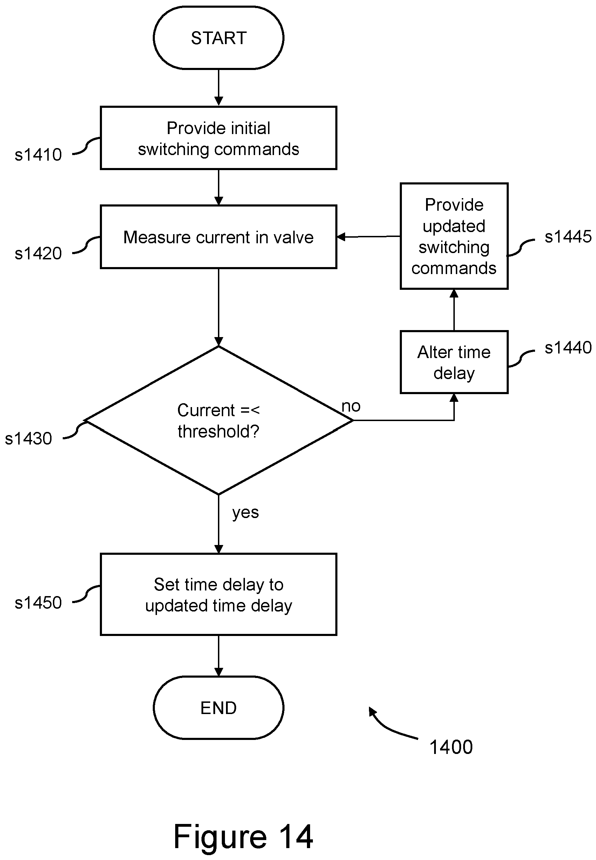

Figure 14 is a process flow chart showing certain steps of a third method 1400. The third method 1400 is a method for modifying or updating or tuning (e.g., optimising) the time difference. Such a modified (e.g. optimised) time difference tends to cause the switching of the second submodule of the submodule pair to more effectively cancel out the resonance caused by the switching of the first submodule of the submodule pair. The third method 1400 can, for example, be performed after the first method 1200 or second method 1300 has been performed.

At a step s1410, the controller 160 provides an initial first switching command at an initial first switching time to an initial first submodule of the plurality of submodules, and an initial second switching command at an initial second switching time to an initial second submodule of the plurality of submodules. The initial first switching time differs from the initial second switching time by an initial time difference. In this example the initial time difference is based on the property of resonance in the power converter. The initial time difference may be calculated by the controller 160 by performing the first or second methods 1200, 1300.

At a step s1420, the controller 160 measures a current in the power converter 120, wherein the current is a result of switching the initial first submodule and the initial second submodule at the respective initial switching times. The current is indicative of a resonance induced in the valve as a result of switching the first submodule and the second submodule at the respective initial switching times. The measured current will be similar to the current waveform 805 shown in Figure 8C.

At a step s1430, the controller 160 compares the measured current to a threshold value. Any suitable parameter of the measured current (for example, peak current, Root Mean Square (RMS) current, etc.) may be used for the comparison. The threshold value can also be selected dependent upon the parameter of the current that is to be compared. For example, if the parameter of the measured current is RMS current, then the threshold value will be an appropriate RMS value threshold. The value of the threshold may be application dependent.

If the measured current exceeds the threshold value, then the method 1400 proceeds to step s1440.

However, if the measured current is less than or equal to the threshold value, then the method 1400 proceeds to step s1450. Step s1450 is described in more detail later below after the description of steps s1440 and s1445.

At step s1440, the controller 160 alters the initial time difference, by increasing or decreasing the initial time difference, to determine an updated time difference. For example, the controller 160 may increase the initial time difference by between 5% and 20%, e.g. a time equal to 5%, 10%, or 20% of the time of a half-cycle of the resonant frequency, or of the initial time difference. For example, if the initial time difference is 5 microseconds, then the controller 160 may alter the initial time difference by increasing the initial time difference to 5.25 microseconds (equal to a 5% increase). From step s1440, the method 1400 proceeds to step s1445.

At step s1445, the controller 160 provides updated switching commands to the first submodule and the second submodule based on the updated time difference. In particular, the updated switching commands include an updated first switching time and/or an updated second switching time, wherein the updated first switching time differs from the updated second switching time by the updated time difference.

After step s1445, the controller 160 then repeats steps s1420 and s1430 to determine if the measured current is equal to or below the threshold with the updated switching commands. If the measured current is greater than the threshold, then the controller 160 continues to perform steps s1440, s1445, s1420 and s1430 in an iterative process in order to calculate an updated time difference, in a manner that would cause the measured current to converge to be equal to or below the threshold value.

For example, if measured current with the updated time difference of 5.25 microseconds was closer to the threshold value then the measured current with the initial time difference of 5 microseconds, then the controller would iteratively alter the time difference by increasing the time difference to cause the measured current to converge to be equal to or below the threshold vale.

On the other hand, if measured current with the updated time difference of 5.25 microseconds was further from the threshold value then the measured current with the initial time difference of 5 microseconds, then the controller would iteratively alter the time difference by decreasing the time difference to cause the measured current to converge to be equal to or below the threshold vale.

Once the measured current is equal to or below the threshold value, the method 1400 proceeds to step s1450.

At step s1450, the controller 160 stores the updated time difference in a memory location, for use in the method 900, as discussed above.

In this manner, the controller 160 optimises or tunes the time difference such that time difference provides a measured current that is less than or equal to the threshold, which tends to cause the switching of the second submodule to more effectively cancel out the resonance caused by the switching of the first submodule.

The third method 1400 does not need to be performed during the continuous operation of the power converter 120. The third method 1400 may be performed only once during a commissioning stage or setup process of the power converter 120 or valve 224. The third method 1400 may be performed again if there is a change in the power converter 120, for example a component of the power converter 120 is replaced due to servicing or maintenance requirements.

The third method 1400 may be performed during operation of the power converter, for example at periodic intervals. Periodically performing the third method 1400 tends to ensure the power converter 120 or valve 224 is operating at a maximum efficiency. This is because periodically re-calculating the time difference of the valve 224 or power converter 120 tends to ensure that any medium- or long-term changes in the power converter 120 can be accounted for.

In the above embodiments the controller 160 comprises the first module 225 and the second module 235, wherein the first module 225 determines the switching command 230 and the second module 235 modifies the switching command 230 to provide the improved switching command 240. However, it is to be understood that embodiments should not be limited in this way.

For example, in other embodiments the first module 225 and the second module 235 are a single module within the controller 160, such that the determination of the improved switching command 240 is completed by a single algorithm based on the voltage demand 250.

In some embodiments, the controller 160 is not a separate controller, but is instead a part of another controller or control system.

In the above embodiments, the controller 160 determines the first switching times by acquiring the switching times of the respective first selected submodules from the switching command 230. However, it is to be understood that embodiments should not be limited in this way. For example, in other embodiments, the controller 160 may modify or alter the first switching times and the second switching times. This may be useful when, for example, the first switching times are not different switching times within the time period. Thus, the controller 160 may change each of the first switching times to be separate or different switching times within the time period, such that there is a time difference (T1) between the first and second switching times in each submodule pair, and there is a further time difference (T2) between each of the submodule pairs with the time period. In such cases, the total time (T1 + T2) may need to vary according to the number of submodules being switched in that time period, but the time T1 could remain fixed so as to achieve maximum attenuation of high frequencies. The most effective attenuation tends to occur when the main oscillatory frequency to be suppressed is 0.5 x T1. The invention can be extended to suppress other frequencies as well, by fixing both T1 and T2.

## Claims

1. A method for controlling a plurality of submodules in a valve of a power converter, the method comprising:
determining, by a controller, a first switching time for a first submodule of the plurality of submodules;
determining, by the controller, a second switching time for a second submodule of the plurality of submodules, wherein the first switching time differs from the second switching time by a time difference;
wherein the time difference is based on a property of resonance in the power converter, wherein the resonance in the power converter is that caused by switching at least one submodule of the plurality of submodules in the valve; and
providing, by the controller, one or more switching commands to the valve to cause the first submodule to switch at the first switching time and the second submodule to switch at the second switching time.

2. The method of claim 1, further comprising:
acquiring, by the controller, information which specifies respective switching times for selected submodules of the plurality of submodules which are to be switched, within a time period, in order to control the output voltage of the valve;
pairing, by the controller, substantially each of the selected submodules into pairs, wherein each submodule pair comprises a respective first submodule and a respective second submodule;
wherein the step of determining the first switching time comprises acquiring, by the controller, from the information, a respective first switching time for each of the first submodules;
wherein the step of determining the second switching time is performed for each of the second submodules; and
wherein the providing step comprises providing, by the controller, respective switching commands to the valve, to cause the respective first submodules and the respective second submodules to switch at their respective switching times.

3. The method of claim 2, wherein the step of acquiring the information comprises:
determining, by the controller, the selected submodules of the plurality of submodules based on a voltage demand; and
determining, by the controller, the respective switching times for the selected submodules, wherein the respective switching times are different switching times with the time period.

4. The method of any preceding claim, wherein the step of providing respective switching commands to the valve comprises:
providing respective first switching commands for each of the first submodules at the respective first switching times, and providing respective second switching commands for each of the second submodules at the respective second switching times.

5. The method of any preceding claim, further comprising:
determining, by the controller, the time difference such that a resonance in the power converter caused by switching the second submodule destructively interferes, at least to some extent, with a resonance in the power converter caused by switching the first submodule.

6. The method of any preceding claim, wherein the resonance in the power converter induces an oscillating current in the power converter, wherein the oscillating current has a half-cycle time, the method further comprising:
determining, by the controller, the time difference as an odd integer multiple of the half-cycle time.

7. The method of any preceding claim, wherein the resonance causes oscillatory current in the power converter at a plurality of frequencies, wherein at least one of the plurality of frequencies is a dominant resonant frequency, the method further comprising:
determining, by the controller, the time difference as an odd integer multiple of a half-cycle time of an oscillating current at the dominant resonant frequency.

8. The method of any one of claims 5 to 7, wherein
the time difference is determined during a commissioning stage or setup process of the power converter; and/or
the time difference is determined during an operation of the power converter.

9. The method of any preceding claim, wherein the resonance causes oscillatory current in the power converter at a plurality of frequencies, the method further comprising:
determining, by the controller, a dominant resonant frequency of the resonance in the power converter.

10. The method of claim 9, wherein determining the dominant resonant frequency comprises:
providing, by the controller, a test switching command to a submodule of the plurality of submodules to test switch that submodule;
measuring, by the controller, a current in the valve, wherein at least a part of the current is an oscillatory current caused by resonance induced by the test switching of the submodule; and
calculating, by the controller, the dominant resonant frequency by analysing the measured current in the valve.

11. The method of claim 9, wherein determining the dominant resonant frequency comprises:
providing, by the controller, multiple switching commands to the plurality of submodules to switch multiple submodules;
measuring, by the controller, a current in the valve over an integration time, wherein at least a part of the current is an oscillatory current caused by resonance induced by the switching of the multiple submodules;
calculating, by the controller, a Fast Fourier Transform of the measured current; and
determining, by the controller, a dominant frequency component of the Fast Fourier Transform.

12. The method of claim 10 or 11, wherein the current comprises a frequency component equal to or greater than 100kHz.

13. The method of any preceding claim, further comprising iteratively performing steps 1 to 4 at least until a measured current value is below a threshold value, wherein:
step 1 comprises providing, by the controller, an initial first switching command at an initial first switching time to an initial first submodule of the plurality of submodules, and an initial second switching command at an initial second switching time to an initial second submodule of the plurality of submodules, wherein the initial first switching time differs from the initial second switching time by an initial time difference, wherein the initial time difference is based on the property of resonance in the power converter;
step 2 comprises measuring, by the controller, a current in the power converter, wherein the current is a result of switching the initial first submodule and the initial second submodule at the respective initial switching times;
step 3 comprises comparing, by the controller, the measured current to the threshold value, and, in response to the measured current exceeding the threshold value, altering, by the controller, the initial time difference to an updated time difference; and
step 4 comprises setting, by the controller, the initial time difference to the updated time difference.

14. A controller for controlling a plurality of submodules in a valve of a power converter, the controller configured to:
determine a first switching time for a first submodule of the plurality of submodules;
determine a second switching time for a second submodule of the plurality of submodules, wherein the first switching time differs from the second switching time by a time difference;
wherein the time difference is based on a property of resonance in the power converter, wherein the resonance in the power converter is that caused by switching at least one submodule of the plurality of submodules in the valve; and
provide one or more switching commands to the valve to cause the first submodule to switch at the first switching time and the second submodule to switch at the second switching time.

15. The controller of claim 14, wherein the controller is further configured to:
acquire information which specifies respective switching times for selected submodules of the plurality of submodules which are to be switched, within a time period, in order to control the output voltage of the valve;
pair substantially each of the selected submodules into pairs, wherein each submodule pair comprises a respective first submodule and a respective second submodule;
acquire, from the information, a respective first switching time for each of the first submodules;
determine the second switching time for each of the second submodules; and
provide respective switching commands to the valve, at the respective first switching times and second switching times, to cause the respective first submodules and the respective second submodules to switch at their respective switching times.
